# FASCICULE DE BREVET EUROPEEN

(11) **EP 2 039 968 B1**
(45) Date de publication et mention de la délivrance du brevet: **22.12.2010**
(21) Numéro de dépôt: 08161575.9
(22) Date de dépôt: 31.07.2008
(51) Int. Cl.: F16J 15/56, F16D 27/00, F16D 23/12

(54) **Dispositif de commande à moyens d'étanchéité perfectionnés**
Steuervorrichtung mit perfektionierten Abdichtmitteln
Control device with improved sealing means

(30) Priorité: 11.09.2007 FR 0757496
(43) Date de publication de la demande: 25.03.2009
(73) Titulaire: Valeo Embrayages, 80009 Amiens (FR)
(72) Inventeur: Maurel, Hervé, 80000, AMIENS (FR); Delevallee, Jean-Louis, 80090, AMIENS (FR)
(74) Mandataire: Lemaire, Marc

(56) Documents cités:
- EP-A- 1 083 357
- DE-A1- 19 840 368
- GB-A- 2 309 761
- US-A- 3 037 485
- US-A- 4 617 855

## Description

La présente invention concerne un dispositif de commande destiné par exemple à être relié à un embrayage de véhicule automobile.

On connaît déjà dans l'état de la technique, notamment d'après EP-A-1 552 176, un dispositif de commande destiné à être relié à un embrayage de véhicule automobile.

Ce dispositif de commande comporte des moyens d'entraînement d'un organe mené déplaçable au moins en translation entre deux positions escamotée et saillante à travers un orifice ménagé dans un carter fixe. Par exemple, l'organe mené est un organe allongé, déplaçable longitudinalement en translation et destiné à être relié cinématiquement à un embrayage de véhicule automobile.

On notera qu'on distingue la position escamotée de l'organe mené de sa position saillante par le fait que la partie de l'organe mené qui s'étend dans le carter est plus importante en position escamotée qu'en position saillante.

Afin de protéger notamment les moyens d'entraînement contre l'eau ou la poussière, le dispositif de commande comporte des moyens d'étanchéité entre le carter et une partie de l'organe mené s'étendant à l'extérieur du carter, dite partie externe.

Les moyens d'étanchéité comprennent un organe d'étanchéité en forme de soufflet, entourant l'organe mené, comprenant une première extrémité fixée à la partie externe de l'organe mené et une seconde extrémité fixée au carter.

On notera qu'un tel soufflet est relativement encombrant radialement, du fait de la dimension radiale des plis du soufflet nécessaires à l'étirement axial du soufflet lorsque l'organe mené se déplace entre ses positions saillante et escamotée. De plus, ce soufflet est relativement encombrant axialement, du fait des plis du soufflet qui sont encombrants axialement lorsque l'organe mené est en position escamotée.

A cause de cet encombrement, il est difficile d'agencer un tel dispositif de commande dans certains types de véhicule comportant un espace réduit pour le logement du dispositif de commande.

On connaît aussi d'après US-A-3 037 485 un dispositif de commande de direction, du type comportant :
- des moyens d'entraînement d'un organe mené déplaçable au moins en translation entre deux positions escamotée et saillante à travers un orifice ménagé dans un carter fixe,
- des moyens d'étanchéité entre le carter et une partie de l'organe mené s'étendant à l'extérieur du carter, dite partie externe,
dans lequel les moyens d'étanchéité comprennent un premier organe d'étanchéité entourant l'organe mené, comprenant :
- une première extrémité liée en translation à la partie externe de l'organe mené lorsque cet organe mené se déplace entre ses positions escamotée et saillante,
- une seconde extrémité montée coulissante à travers l'orifice,
et un second organe annulaire d'étanchéité entre le carter et la seconde extrémité du premier organe d'étanchéité.

Le premier organe d'étanchéité comportant une seconde extrémité coulissant à travers l'orifice, cet organe d'étanchéité est apte à s'escamoter à l'intérieur du carter lorsque l'organe mené est dans sa position escamotée. Ainsi, l'encombrement dû à ce premier organe d'étanchéité est limité puisqu'il n'occupe pas d'espace extérieur au carter en position escamotée.

En outre, grâce au second organe annulaire d'étanchéité, le premier organe d'étanchéité peut coulisser dans l'orifice sans incidence sur l'étanchéité du dispositif.

L'invention a notamment pour but de remédier à des inconvénients d'étanchéité en fournissant un dispositif de commande du type précité.

A cet effet, l'invention a pour objet un dispositif de commande du type précité dans lequel le premier organe d'étanchéité comporte un élément tubulaire rigide, formant la seconde extrémité, relié à un élément de jonction étanche formant la première extrémité, cet élément de jonction étant destiné, le cas échéant, à se déformer radialement et/ou axialement ;

Un dispositif de commande selon l'invention peut en outre comporter l'une ou plusieurs des caractéristiques suivantes :
- le premier organe d'étanchéité comporte, à sa seconde extrémité, un épaulement formant butée, destiné à coopérer avec une butée d'arrêt complémentaire ménagée sur le carter lorsque l'organe mené est en position saillante ;
- la première extrémité du premier organe d'étanchéité est liée en translation de manière libérable à la partie externe de l'organe mené ;
- le dispositif de commande comporte des moyens de rattrapage d'usure, apte à déplacer la position saillante de l'organe mené, comprenant un organe télescopique de rattrapage d'usure, comportant une première partie liée cinématiquement aux moyens d'entraînement, et une seconde partie destinée à coopérer avec l'organe mené pour l'entraîner de sa position escamotée vers sa position saillante, les première et seconde parties étant aptes à se déplacer en translation l'une par rapport à l'autre, par coopération de filetages complémentaires portés par ces première et seconde parties ;
- la seconde partie de l'organe télescopique de rattrapage d'usure est dimensionnée de façon à pouvoir coulisser dans le premier organe d'étanchéité lorsque cette seconde partie se déplace en translation par rapport à la première partie ;
- la seconde partie de l'organe télescopique de rattrapage d'usure est dimensionnée de façon à pouvoir coulisser dans l'élément tubulaire rigide ;
- les moyens d'entraînement comportent un pignon menant, relié cinématiquement à un arbre de moteur électrique, engrenant avec une crémaillère reliée cinématiquement à l'organe mené ;
- le dispositif de commande comporte des moyens d'assistance à l'entraînement de l'organe mené, comprenant un organe d'assistance sollicité élastiquement contre une came, par exemple un organe d'assistance comprenant au moins un ressort de poussée agencé entre des sièges fixe et mobile, le siège mobile portant un organe de contact destiné à coopérer avec la came ;
- l'organe mené est une tige déplaçable en translation;
- l'organe mené est destiné à être relié cinématiquement à un embrayage de véhicule automobile.

L'invention sera mieux comprise à la lecture de la description qui va suivre, donnée uniquement à titre d'exemple et faite en se référant aux dessins annexés dans lesquels :
- la figure 1 est une vue en perspective d'un dispositif de commande selon un exemple de mode de réalisation de l'invention,
- les figures 2 à 4 sont des vues en coupe du dispositif de la figure 1 dans différentes configurations d'utilisation,
- la figure 5 est une vue en perspective d'un dispositif de rattrapage d'usure du dispositif de la figure 1.

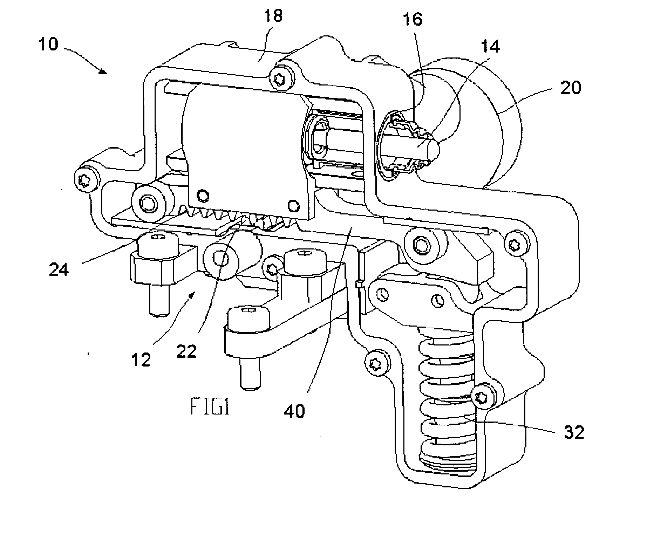

On a représenté sur la figure 1 un dispositif de commande selon un exemple de mode de réalisation de l'invention, désigné par la référence générale 10. Dans l'exemple décrit, le dispositif 10 est destiné à être relié à un embrayage de véhicule automobile afin de commander cet embrayage.

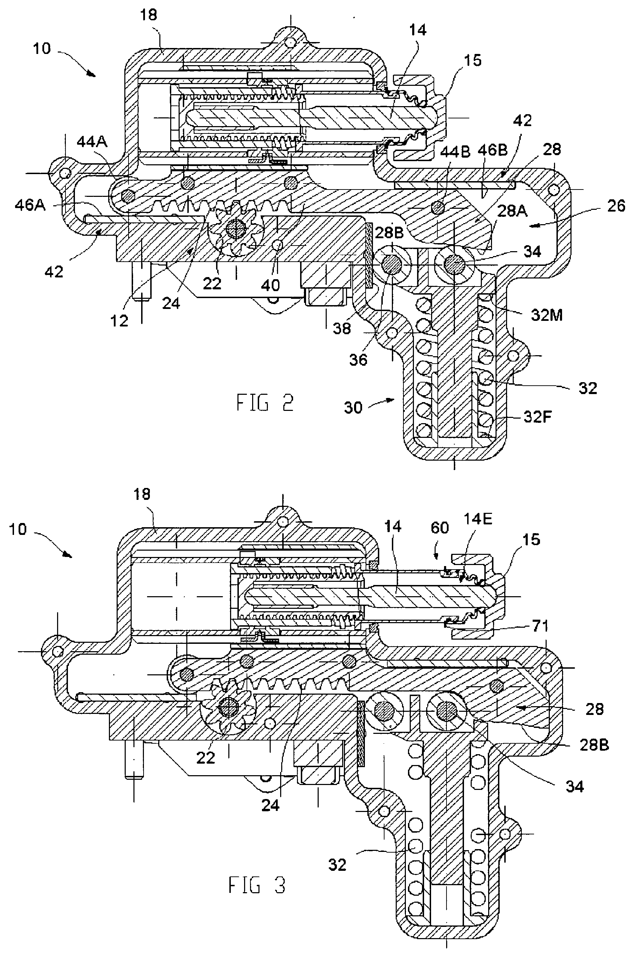

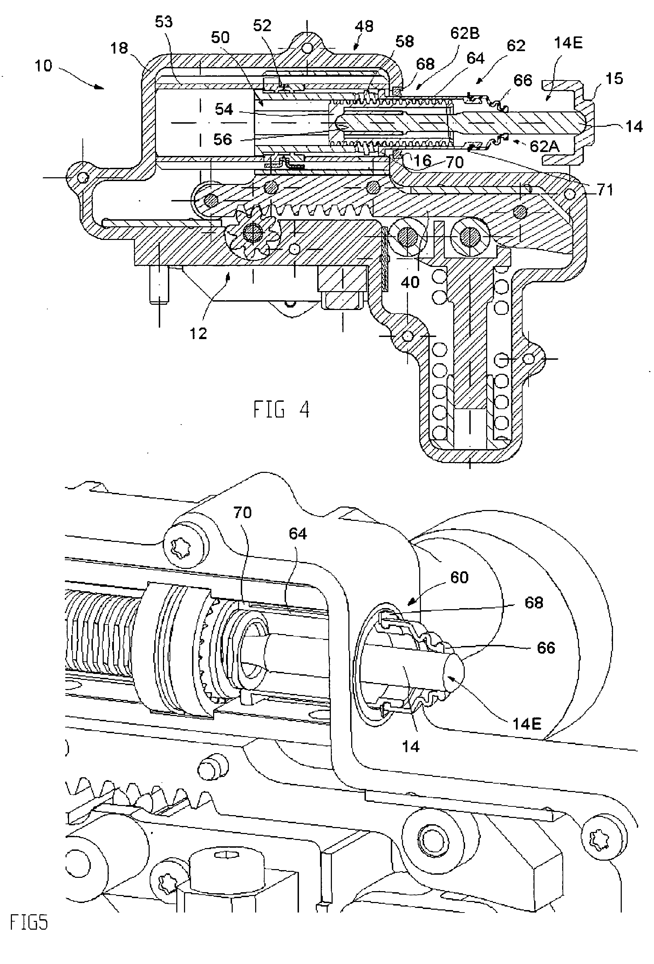

Le dispositif de commande 10 comprend des moyens 12 d'entraînement en translation d'un organe mené 14 de forme générale allongée selon une direction dite longitudinale. Ainsi, cet organe mené 14 est susceptible de se déplacer au moins en translation entre une position escamotée (représentée sur la figure 2) et une position saillante (représentée sur les figures 3 et 4), à travers un orifice 16 ménagé dans un carter fixe 18 du dispositif 10.

On notera qu'on distingue la position escamotée de l'organe mené 14 de sa position saillante par le fait que la partie de l'organe mené 14 qui s'étend dans le carter est plus importante en position escamotée qu'en position saillante.

Dans l'exemple représenté, l'organe mené 14 est une tige déplaçable en translation, destinée à être reliée cinématiquement à un embrayage de véhicule automobile. Par exemple, l'organe mené 14 est destiné à venir en butée avec un élément classique de tringlerie de commande, de préférence une fourchette 15 de commande d'embrayage de véhicule automobile.

En variante, l'organe mené 14 pourrait former un organe d'entrée de commande hydraulique. Dans ce cas, l'organe mené serait une tige de piston de vérin hydraulique, ou un élément solidaire d'une telle tige.

Les moyens d'entraînement 12 comportent un moteur électrique 20, fixé au carter 18, dont l'arbre de sortie forme un organe menant couplé à un pignon menant 22, directement ou par l'intermédiaire de moyens à engrenage, par exemple des moyens de réduction de type épicycloïdal.

Le pignon 22 est destiné à coopérer avec une crémaillère 24 reliée cinématiquement à l'organe mené 14 à l'aide de moyens qui seront décrits plus en détail ultérieurement.

La crémaillère 24 est munie d'une surface de denture définie par une courbe directrice plane de denture et une droite génératrice de denture, perpendiculaire au plan de la directrice de denture, passant par cette directrice de denture.

Le dispositif de commande 10 comprend également des moyens 26 d'assistance à l'entraînement de l'organe mené 14.

Ces moyens d'assistance 26 comprennent une came 28 et des moyens 30 de sollicitation élastique de cette came.

La came 28 est munie d'une surface de came définie par une courbe directrice plane de came et une droite génératrice de came, perpendiculaire au plan de la directrice de came, passant par cette directrice de came.

Les moyens 30 de sollicitation élastique comportent un organe élastique d'assistance 32 à effet axial, sollicité élastiquement contre la came 28. De préférence, l'organe d'assistance 32 comprend au moins un ressort de poussée, par exemple deux ressorts de poussée coaxiaux et logés l'un dans l'autre.

L'organe élastique 32 s'étend entre un siège fixe 32F, dont la position est indépendante de l'allongement de l'organe élastique 32, et un siège mobile 32M, dont la position dépend de l'allongement de l'organe élastique 32.

Le siège fixe 32F est solidaire du carter 18 dans lequel sont logés les moyens d'assistance 26.

Le siège mobile 32M porte un organe de contact 34 destiné à coopérer avec la came 28. De préférence, l'organe de contact 34 comprend au moins un galet destiné à rouler sur la came 28. En outre, le siège mobile 32M porte un second galet 36, destiné à coopérer avec une paroi plane 38 du carter 18 pour guider le siège mobile 32M parallèlement à l'effet axial de l'organe d'assistance 32.

Conformément à l'exemple représenté, les moyens d'entraînement 12 et d'assistance 26 sont couplés à l'aide d'un organe de couplage 40 lié cinématiquement à l'organe mené 14. En effet, l'organe de couplage 40 porte la crémaillère 24 et la came 28. De préférence, l'organe de couplage 40 est formé par une seule pièce allongée, aux extrémités de laquelle sont ménagées respectivement la crémaillère 24 et la came 28.

On notera que la crémaillère 24 et la came 28 sont agencées sur l'organe de couplage 40 de façon que la génératrice de denture de la crémaillère 24 soit parallèle à la génératrice de la came 28.

De préférence, le dispositif 10 comporte des moyens 42 de guidage en translation de l'organe de couplage 40. Ces moyens de guidage 42 comportent par exemple des galets 44A, 44B, respectivement agencés à deux extrémités de l'organe de couplage 40, coopérant respectivement avec des parois de guidage 46A, 46B ménagées sur le carter 18.

On notera que, du fait que les génératrices de denture et de came sont parallèles, il est uniquement nécessaire de guider l'organe de couplage 40 en translation longitudinale.

On précisera ci-dessous les principaux aspects du fonctionnement du des moyens d'entraînement 12 et d'assistance 26 du dispositif de commande 10, en référence aux figures 2 et 3.

On considère initialement le dispositif de commande 10 dans une position dans laquelle l'embrayage est par exemple dans une configuration débrayée (figure 2), l'organe mené 14 étant en position escamotée.

Le galet 34 des moyens d'assistance 26 coopère avec une première partie 28A de la surface de la came 28. Cette partie de surface 28A est de préférence sensiblement perpendiculaire à l'axe de l'organe d'assistance 32, ou faiblement inclinée par rapport à un plan perpendiculaire à cet axe.

Pour placer l'embrayage dans une configuration embrayée (figure 3), le moteur électrique 20 est activé de façon à entraîner le pignon 22 dans un sens d'embrayage. Ce pignon 22, engrenant avec la denture de la crémaillère 24, déplace l'organe de couplage 40 de façon à entraîner l'organe mené 14 vers sa position saillante.

Du fait de ce déplacement de l'organe de couplage 40, la position relative du galet 34 par rapport à la came 28 est modifiée de façon que ce galet 34 coopère avec une seconde partie 28B de la surface de la came, de préférence plus inclinées que la première partie de surface 28A.

Par effet de rampe entre la came 28 et le galet 34 en contact avec celle-ci, l'organe de couplage 40 est sollicité élastiquement dans le même sens que celui imposé par la rotation du pignon 22 dans le sens d'embrayage.

Les moyens d'assistance 26 permettent donc d'assister le déplacement de l'organe mené 14 lors du passage d'une configuration débrayée à une configuration embrayée de l'embrayage.

Pour revenir en position débrayée, il suffit d'entraîner le pignon 22 en rotation dans un sens de débrayage contraire au sens d'embrayage.

On notera que, l'usure de l'embrayage, notamment l'usure d'une friction de l'embrayage, a tendance à augmenter la course de la fourchette 15 de l'embrayage entre ses positions de commande d'embrayage et de débrayage.

Afin de compenser l'effet de l'usure de l'embrayage, le dispositif de commande 10 comprend des moyens 48 de rattrapage d'usure, destinés à déplacer la position saillante de fin de course de l'organe mené, comme cela est visible sur la figure 4.

Les moyens de rattrapage d'usure peuvent être d'un type classique. On décrira ci-dessous les principaux éléments d'un exemple de réalisation de moyens 48 de rattrapage d'usure sans rentrer dans les détails de leur structure et de leur fonctionnement connus de l'homme du métier spécialiste des dispositifs de rattrapage d'usure. On pourra également se reporter au document FR-06 51935 qui décrit en détail des moyens de rattrapage d'usure.

Dans l'exemple illustré, les moyens 48 de rattrapage d'usure comportent un organe télescopique 50 de rattrapage d'usure.

Cet organe télescopique 50 comporte une première partie 52 liée cinématiquement aux moyens d'entraînement 12. Par exemple, cette première partie 52 est fixée sur l'organe de couplage 40 par des vis si bien qu'elle est liée en translation avec cet organe de couplage 40. Le dispositif de commande 10 comporte des rails 53 de guidage de l'organe télescopique 50 en translation.

L'organe télescopique 50 comporte également une seconde partie 54 destinée à coopérer avec l'organe mené 14 pour l'entraîner de sa position escamotée vers sa position saillante. A cet effet, la seconde partie 54 comporte une butée 56 susceptible de coopérer avec l'organe mené 14 éventuellement de façon légèrement rotulante.

Les première 52 et seconde 54 parties sont aptes à se déplacer en translation l'une par rapport à l'autre, par coopération de filetages complémentaires portés par ces première 52 et seconde parties 54.

En effet, la première partie 52 comporte un écrou 58, libre en rotation, muni d'un filetage intérieur coopérant avec un filetage complémentaire ménagé sur la seconde partie 54. Ainsi, lorsque l'écrou 58 tourne, la seconde partie 54 se déplace en translation par rapport à la première partie 52, déplaçant ainsi la position saillante de fin de course de l'organe mené 14.

Afin de protéger les éléments intérieurs au carter 18 de l'eau ou de la poussière, le dispositif de commande 10 comporte des moyens 60 d'étanchéité entre le carter 18 et une partie 14E de l'organe mené s'étendant à l'extérieur du carter, dite partie externe 14E. Ces moyens d'étanchéité 60 sont visibles plus en détail sur la figure 5.

Les moyens d'étanchéité 60 comprennent un premier organe d'étanchéité 62 entourant l'organe mené 14.

Ce premier organe d'étanchéité 62 comporte un élément tubulaire rigide 64 relié à un élément 66, de forme générale de révolution, assurant une jonction étanche avec l'organe mené 14.

L'élément de jonction 66 forme une première extrémité 62A du premier organe d'étanchéité 62. Cette première extrémité 62A est liée en translation à la partie externe 14E de l'organe mené 14 lorsque cet organe mené 14 se déplace entre ses positions escamotée et saillante.

En effet, cet élément de jonction 66 est monté suffisamment serré autour de l'organe mené 14 pour que le premier organe d'étanchéité 62 soit entraîné en translation par l'organe mené 14 lorsque celui-ci se déplace entre ses positions escamotée et saillante.

On notera toutefois que cet élément de jonction 66 est lié en translation de manière libérable à la partie externe 14E de l'organe mené 14, afin de permettre le déplacement de l'organe mené 14 par rapport au premier organe d'étanchéité 62 lorsque les moyens de rattrapage d'usure 48 déplacent la position saillante de fin de course de l'organe mené 14. En effet le serrage de l'élément de jonction 66 est calibré pour permettre ce déplacement de l'organe mené 14 par rapport au premier organe d'étanchéité 62.

Par ailleurs, on notera que l'élément de jonction 66 est suffisamment souple pour pouvoir, le cas échéant, se déformer radialement et/ou axialement. Notamment, cet élément de jonction 66 est suffisamment souple radialement pour ne pas exercer un effort de résistance trop important en cas de débattement radial de l'organe mené 14 (du fait de la coopération rotulante de l'organe 14 avec l'organe télescopique 50). En effet, un effort de résistance trop important risquerait d'endommager cet élément de jonction 66.

L'élément tubulaire rigide 64 forme une seconde extrémité 62B du premier organe d'étanchéité 62, montée coulissante à travers l'orifice 16 du carter 18. Le premier organe d'étanchéité 62 est donc susceptible de coulisser à l'intérieur du carter 18, ce qui réduit son encombrement axial à l'extérieur du carter en position escamotée de l'organe mené 14.

L'élément tubulaire rigide 64 coulisse également à travers un second organe annulaire d'étanchéité 68 agencé entre le contour de cet orifice 16 et la seconde extrémité 62B du premier organe d'étanchéité 62. Ce second organe d'étanchéité permet d'assurer l'étanchéité entre l'élément tubulaire 64 et le carter 18.

On notera que l'élément tubulaire 64 comporte un épaulement 70 formant butée, destiné à coopérer avec une butée d'arrêt complémentaire ménagée sur le carter 18 lorsque l'organe mené 14 est en position saillante. Cet épaulement 70 comporte également des rainures destinées à coopérer avec les rails de guidage 53 de façon à guider l'élément tubulaire 64 en translation.

Le premier organe d'étanchéité 62 comporte en outre une rondelle de butée 71 agencée autour de l'élément tubulaire 64, destinée à coopérer avec une butée d'arrêt complémentaire ménagée sur le carter 18 lorsque l'organe mené 14 est en position escamotée.

On notera également que la seconde partie 54 de l'organe télescopique de rattrapage d'usure 50 est dimensionnée de façon à pouvoir coulisser dans le premier organe d'étanchéité 62, notamment dans l'élément tubulaire rigide 64, lorsque cette seconde partie 54 se déplace en translation par rapport à la première partie 52.

Ainsi, la seconde partie 54 et l'élément tubulaire rigide 64 ne se gênent pas mutuellement lors de leurs déplacements respectifs, et la seconde partie 54 ne risque pas d'endommager le premier organe d'étanchéité 62.

On notera enfin que l'invention n'est pas limitée au mode de réalisation précédemment décrit.

En effet, en variante, l'invention pourrait être appliquée à un dispositif de commande ne comportant pas de moyens de rattrapage d'usure.

## Revendications

1. Dispositif de commande (10) comportant:
- des moyens (12) d'entraînement d'un organe mené (14) déplaçable au moins en translation entre deux positions escamotée et saillante à travers un orifice (16) ménagé dans un carter fixe (18),
- des moyens (60) d'étanchéité entre le carter (18) et une partie de l'organe mené (14) s'étendant à l'extérieur du carter (18), dite partie externe (14E),
dans lequel les moyens d'étanchéité (60) comprennent un premier organe d'étanchéité (62) entourant l'organe mené (14), comprenant :
- une première extrémité (62A) liée en translation à la partie externe (14E) de l'organe mené (14) lorsque cet organe mené (14) se déplace entre ses positions escamotée et saillante,
- une seconde extrémité (62B) montée coulissante à travers l'orifice (16) du carter (18) et un second organe annulaire d'étanchéité (68) agencé entre le contour de cet orifice (16) et la seconde extrémité (62B) du premier organe d'étanchéité (62), **caractérisé en ce que**
le premier organe d'étanchéité (62) comporte un élément tubulaire rigide (64), formant la seconde extrémité (62B), relié à un élément de jonction étanche (66) formant la première extrémité (62A), cet élément de jonction (66) étant destiné, le cas échéant, à se déformer radialement et/ou axialement.

2. Dispositif de commande (10) selon la revendication 1, dans lequel le premier organe d'étanchéité (62) comporte, à sa seconde extrémité (62B), un épaulement (70) formant butée, destiné à coopérer avec une butée d'arrêt complémentaire ménagée sur le carter (18) lorsque l'organe mené (14) est en position saillante.

3. Dispositif de commande (10) selon l'une quelconque des revendications précédentes, dans lequel la première extrémité (62A) du premier organe d'étanchéité (62) est liée en translation de manière libérable à la partie externe (14E) de l'organe mené (14).

4. Dispositif de commande (10) selon l'une quelconque des revendications précédentes, comportant des moyens (48) de rattrapage d'usure, apte à déplacer la position saillante de l'organe mené (14), comprenant un organe télescopique (50) de rattrapage d'usure, comportant une première partie (52) liée cinématiquement aux moyens d'entraînement (12), et une seconde partie (54) destinée à coopérer avec l'organe mené (14) pour l'entraîner de sa position escamotée vers sa position saillante, les première (52) et seconde (54) parties étant aptes à se déplacer en translation l'une par rapport à l'autre, par coopération de filetages complémentaires portés par ces première (52) et seconde (54) parties.

5. Dispositif de commande (10) selon la revendication 4, dans lequel la seconde partie (54) de l'organe télescopique de rattrapage d'usure (50) est dimensionnée de façon à pouvoir coulisser dans le premier organe d'étanchéité (62) lorsque cette seconde partie (54) se déplace en translation par rapport à la première partie (52).

6. Dispositif de commande (10) selon la revendication 5, dans lequel dans lequel la seconde partie (54) de l'organe télescopique de rattrapage d'usure (50) est dimensionnée de façon à pouvoir coulisser dans l'élément tubulaire rigide (64).

7. Dispositif de commande (10) selon l'une quelconque des revendications précédentes, dans lequel les moyens d'entraînement (12) comportent un pignon menant (22), relié cinématiquement à un arbre de moteur électrique (20), engrenant avec une crémaillère (24) reliée cinématiquement à l'organe mené (14).

8. Dispositif de commande (10) selon l'une quelconque des revendications précédentes, comportant des moyens (26) d'assistance à l'entraînement de l'organe mené (14), comprenant un organe d'assistance (32) sollicité élastiquement contre une came (28), par exemple un organe d'assistance (32) comprenant au moins un ressort de poussée agencé entre des sièges fixe (32F) et mobile (32M), le siège mobile (32M) portant un organe de contact (34) destiné à coopérer avec la came (28).

9. Dispositif de commande (10) selon l'une quelconque des revendications précédentes, dans lequel l'organe mené (14) est une tige déplaçable en translation.

10. Dispositif de commande (10) selon l'une quelconque des revendications précédentes, dans lequel l'organe mené (14) est destiné à être relié cinématiquement à un embrayage de véhicule automobile.

## Claims

1. Control device (10) comprising:
- means (12) for driving a driven unit (14), which can be displaced at least in translation between two, retracted and projecting positions, through an aperture (16) which is provided in a fixed housing (18); and
- means (60) for sealing between the housing (18) and a part of the driven unit (14) which extends on the exterior of the housing (18), known as the exterior part (14E),
wherein the sealing means (60) comprise a first sealing unit (62) which surrounds the driven unit (14), comprising:
- a first end (62A), which is connected in translation to the exterior part (14E) of the driven unit (14), when this driven unit (14) is displaced between its retracted and projecting positions; and
- a second end (62B) which is fitted such as to slide through the aperture (16) in the housing (18), and a second annular sealing unit (68) which is arranged between the contour of this aperture (16) and the second end (62B) of the first sealing unit (62), **characterised in that**:
the first sealing unit (62) comprises a rigid tubular element (64) which forms the second end (62B), and is connected to a sealed joining element (66) which forms the first end (62A), this joining element (66) being designed, if applicable, to be deformed radially and/or axially.

2. Control device (10) according to claim 1, wherein the first sealing unit (62) comprises, at its second end (62B), a shoulder (70) which forms a stop, and is designed to co-operate with a complementary limit stop which is provided on the housing (18), when the driven unit (14) is in the projecting position.

3. Control device (10) according to either of the preceding claims, wherein the first end (62A) of the first sealing unit (62) is connected in translation in a manner such that it can be released, to the exterior part (14E) of the driven unit (14).

4. Control device (10) according to any one of the preceding claims, comprising means (48) for compensation for wear, which can displace the projecting position of the driven unit (14), comprising a telescopic unit (50) for compensation for wear, comprising a first part (52) which is connected kinematically to the drive means (12), and a second part (54), which is designed to co-operate with the driven unit (14) in order to drive it from its retracted position to its projecting position, the first (52) and second (54) parts being able to be displaced in translation relative to one another by co-operation of complementary threads which these first (52) and second (54) parts bear.

5. Control device (10) according to claim 4, wherein the second part (54) of the telescopic unit (50) for compensation for wear has dimensions such that it can slide in the first sealing unit (62), when this second part (54) is displaced in translation relative to the first part (52).

6. Control device (10) according to claim 5, wherein the second part (54) of the telescopic unit (50) for compensation for wear has dimensions such that it can slide in the rigid tubular element (64).

7. Control device (10) according to any one of the preceding claims, wherein the drive means (12) comprise a driving pinion (22), which is connected kinematically to a shaft of an electric motor (20), which engages with a pinion (24) which is connected kinematically to the driven unit (14).

8. Control device (10) according to any one of the preceding claims, comprising means (26) for assistance in driving the driven unit (14), comprising an assistance unit (32) which is thrust resiliently against a cam (28), for example an assistance unit (32) comprising at least one thrust spring which is arranged between fixed (32F) and mobile (32M) seats, the mobile seat (32M) bearing a contact unit (34) which is designed to co-operate with the cam (28).

9. Control device (10) according to any one of the preceding claims, wherein the driven unit (14) is a rod which can be displaced in translation.

10. Control device (10) according to any one of the preceding claims, wherein the driven unit (14) is designed to be connected kinematically to a clutch of a motor vehicle.

## Patentansprüche

1. Betätigungsvorrichtung (10), umfassend:
- Mittel (12) zum Antrieb eines Abtriebsorgans (14), das zumindest translatorisch zwischen einer eingefahrenen und einer vorstehenden Position durch eine in ein festes Gehäuse (18) eingebrachte Öffnung (16) hindurch verschiebbar ist,
- Abdichtungsmittel (60) zwischen dem Gehäuse (18) und einem als äußerer Teil (14E) bezeichneten Teil des Abtriebsorgans (14), der sich außerhalb des Gehäuses (18) erstreckt,
wobei die Abdichtungsmittel (60) ein das Abtriebsorgan (14) umgebendes erstes Abdichtungsorgan (62) umfassen, welches umfasst:
- ein erstes Endstück (62A), welches translatorisch an den äußeren Teil (14E) des Abtriebsorgans (14) gebunden ist, wenn dieses Abtriebsorgan (14) sich zwischen seiner eingefahrenen und vorstehenden Position verschiebt,
- ein zweites Endstück (62B), welches verschiebbar durch die Öffnung (16) des Gehäuses (18) und ein zwischen der Kontur dieser Öffnung (16) und dem zweiten Endstück (62B) des ersten Abdichtungsorgans (62) angeordnetes zweites ringförmiges Abdichtungsorgan (68) montiert ist,
**dadurch gekennzeichnet, dass** das erste Abdichtungsorgan (62) ein das zweite Endstück (62B) bildendes starres röhrenförmiges Element (64) umfasst, welches mit einem das erste Endstück (62A) bildenden dichten Anschlusselement (66) verbunden ist, wobei dieses Anschlusselement (66) dazu bestimmt ist, sich gegebenenfalls radial und/oder axial zu verformen.

2. Betätigungsvorrichtung (10) nach Anspruch 1, wobei das erste Abdichtungsorgan (62) an seinem zweiten Endstück (62B) einen Vorsprung umfasst, der einen Anschlag bildet, welcher dazu bestimmt ist, mit einem an dem Gehäuse (18) vorgesehenen komplementären Endanschlag zusammenzuwirken, wenn das Abtriebsorgan (14) in der vorstehenden Position ist.

3. Betätigungsvorrichtung (10) nach einem der vorherigen Ansprüche, wobei das erste Endstück (62A) des ersten Abdichtungsorgans (62) auf lösbare Art translatorisch an den äußeren Teil (14E) des Abtriebsorgans (14) gebunden ist.

4. Betätigungsvorrichtung (10) nach einem der vorherigen Ansprüche, enthaltend Verschleißnachstellmittel (48), die dazu geeignet sind, die vorstehende Position des Abtriebsorgans (14) zu verschieben, umfassend ein teleskopisches Verschleißnachstellorgan (50), welches einen kinematisch mit den Antriebsmitteln (12) verbundenen ersten Teil (52) und einen zweiten Teil (54) umfasst, der dazu bestimmt ist, mit dem Abtriebsorgan (14) zusammen zuwirken, um es von seiner eingefahrenen Position zu seiner vorstehenden Position anzutreiben, wobei der erste Teil (52) und der zweite Teil (54) dazu geeignet sind, sich durch Zusammenwirken von komplementären Gewinden, welche von diesem ersten Teil (52) und zweiten Teil (54) getragen sind, relativ zueinander translatorisch zu verschieben.

5. Betätigungsvorrichtung (10) nach Anspruch 4, wobei der zweite Teil (54) des teleskopischen Verschleißnachstellorgans (50) dazu ausgelegt ist, in dem ersten Abdichtungsorgan (62) gleiten zu können, wenn dieser zweite Teil (54) sich relativ zum ersten Teil (52) translatorisch verschiebt.

6. Betätigungsvorrichtung (10) nach Anspruch 5, wobei der zweite Teil (54) des teleskopischen Verschleißnachstellorgans (50) dazu ausgelegt ist, in dem starren röhrenförmigen Element (64) gleiten zu können.

7. Betätigungsvorrichtung (10) nach einem der vorherigen Ansprüche, wobei die Antriebsmittel (12) ein kinematisch mit der Welle eines Elektromotors (20) verbundenes Antriebsritzel (22) umfassen, welches mit einer Zahnstange (24) in Eingriff ist, die kinematisch mit dem Abtriebsorgan (14) verbunden ist.

8. Betätigungsvorrichtung (10) nach einem der vorherigen Ansprüche, umfassend Mittel (26) zur Unterstützung des Antriebs des Abtrieborgans (14), die ein Unterstützungsorgan (32) aufweisen, welches elastisch gegen einen Nocken (28) beaufschlagt ist, beispielsweise ein Unterstützungsorgan (32) welches zumindest eine Druckfeder umfasst, die zwischen einem festen Sitz (32F) und einem beweglichen Sitz (32M) angeordnet ist, wobei der bewegliche Sitz (32M) ein Kontaktorgan (34) trägt, welches dazu bestimmt ist, mit dem Nocken (28) zusammenzuwirken.

9. Betätigungsvorrichtung (10) nach einem der vorherigen Ansprüche, wobei das Abtriebsorgan (14) ein translatorisch verschiebbarer Stößel ist.

10. Betätigungsvorrichtung (10) nach einem der vorherigen Ansprüche, wobei das Abtriebsorgan (14) dazu bestimmt ist, kinematisch mit einer Kupplung eines Kraftfahrzeugs verbunden zu werden.
